Europäisches Patentamt

European Patent Office

Office européen des brevets

(11) Publication number: **0 077 512**
**B1**

(12) **EUROPEAN PATENT SPECIFICATION**

(45) Date of publication of patent specification: **24.04.85**

(21) Application number: **82109370.5**

(22) Date of filing: **09.10.82**

(51) Int. Cl.⁴: **A 23 L 1/216**

(54) Method and apparatus for mechanized production of potato balls.

(30) Priority: **21.10.81 FI 813287**

(43) Date of publication of application:
**27.04.83 Bulletin 83/17**

(45) Publication of the grant of the patent:
**24.04.85 Bulletin 85/17**

(84) Designated Contracting States:
**AT BE CH DE FR GB IT LI LU NL SE**

(56) References cited:
**DE-A-2 541 703**
**DE-A-2 915 810**

(73) Proprietor: **Kjellman, Fredrik**
**Böjvägen 6**
**SF-68600 Jakobstad (FI)**

(72) Inventor: **Kjellman, Fredrik**
**Böjvägen 6**
**SF-68600 Jakobstad (SE)**
Inventor: **Rosendahl, Per Olof**
**SF-64300 Lappfjärd (SE)**

(74) Representative: **Andrejewski, Walter et al**
**Patentanwälte Andrejewski, Honke & Partner**
**Postfach 10 02 54 Theaterplatz 3**
**D-4300 Essen 1 (DE)**

Courier Press, Leamington Spa, England.

## Description

The present invention is concerned with a method for mechanized production of potato balls as well as with an apparatus for carrying out this method.

In prior art, potato balls have been prepared only manually, which has taken place by means of a manual tool having the shape of a hemispherical scoop provided with a shaft, resembling the tool that is used for forming icecream balls. In this procedure, rather large potatoes must be used, one or several potato balls being taken out of each potato. Thus, it is obvious that the loss from each potato becomes relatively large. Smaller potatoes cannot be used, because they do not provide a sufficient grasping face and, moreover, increase the risk that the relatively sharp edge of the tool penetrates out of the potato during the formation of the potato ball and damages the hand of the operating person. Moreover, the potato balls have a tendency to become dark if they include some of the portion of the potato placed next underneath the peel.

The object of the present invention is to eliminate the above drawbacks and to make it possible to use rather small potatoes, which are otherwise used only as fodder or allowed to remain on the field when the potatoes are harvested. The method in accordance with the invention is characterized in that preferably small potatoes are fed one by one in between a grasping member, which fixes the potato in the working position, whereupon two equally shaped thin cutter blades, which revolve as arranged as facing each other and which have substantially concave semicircular cutting edges, are run against the potato simultaneously each from its side until the extreme tips of both cutter blades run, during rotation of the cutter blades, along paths that are at least almost coinciding. Hereby the cutting edges of the cutter blades act upon the potato and cut a potato ball, whose dimension is determined by the size of the edges of the cutter blades. The potato ball obtained is released and fed out into a container, whereas the rests of the potato are passed into another container.

It is characteristic of the apparatus in accordance with the invention that the apparatus comprises a feeder device connected to one or several grasping means, which grasping means are arranged between or can be shifted into a position between their own respective pair of equally shaped, thin and readily exchangeable cutter blades of concavely semicircular cutting edges, placed as facing each other. The cutter blades are, e.g. by means of an electric motor, arranged so as to revolve around their axes, which are appropriately by means of cylinder-piston devices displaceable in their longitudinal direction away from each other and towards each other until the paths of rotation of the tips of the cutter blades facing towards each other are at least almost coinciding.

The other characteristics of the invention are apparent from the appended patent claims 1 to 28.

The invention will be described in more detail below with reference to the attached drawings, wherein

Figure 1 shows an apparatus in accordance with the invention as viewed from the side,

Figure 2 shows the apparatus of Fig. 1 as viewed from the right.

Figure 3 shows the apparatus as viewed from the top,

Figure 4 shows an example of the way in which the drive belts of the apparatus are drawn,

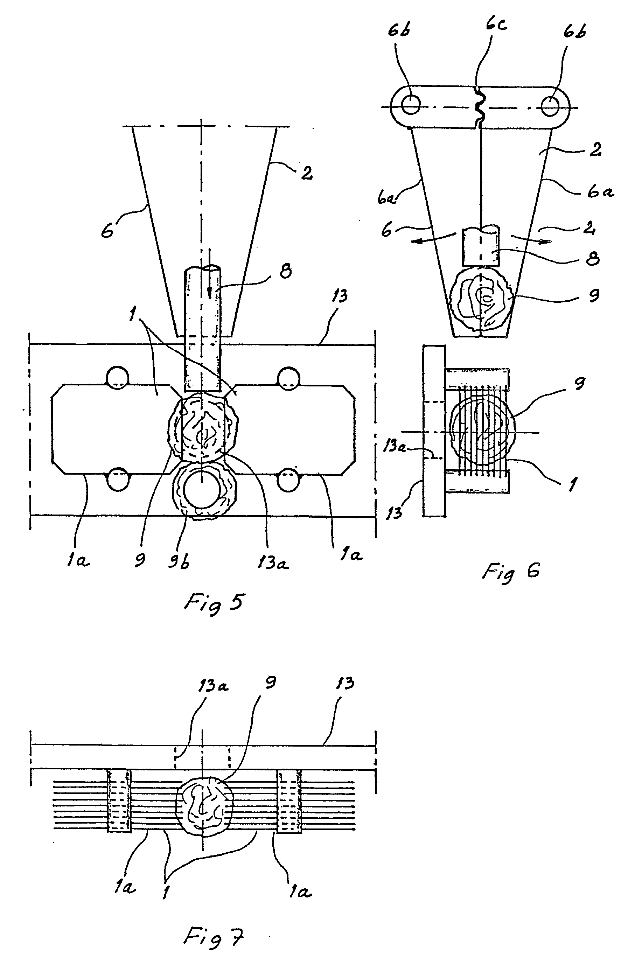

Figure 5 is a detail view of the feeder device and of a grasping means as viewed in the longitudinal direction of the apparatus,

Figure 6 shows the same details as a side view,

Figure 7 shows the grasping means as viewed from above, and

Figures 8 to 11 show different stages of the cutting of a potato ball.

The apparatus in accordance with the invention comprises a feeder device 2 connected to one or several grasping means 1, which grasping means 1 either are arranged between or can be shifted into a position between their own respective pair of equally shaped thin and readily exchangeable cutter blades 3 of concavely semicircular cutting edges 3a, placed as facing each other. These cutter blades 3 are, e.g. by means of an electric motor 4, arranged as revolving around their axes 3b, which are appropriately by means of cylinder-piston devices 5 displaceable in their longitudinal direction away from each other and towards each other until the paths of rotation of the tips 3c of the cutter blades facing each other are at least almost coinciding.

By means of this apparatus, appropriately small potatoes 9, which are otherwise only suitable for fodder, can be fed one by one in between the grasping means 1 of the apparatus, which fixes each potato in the working position between a pair of cutter blades 3. The rotary cutter blades 3 are hereupon pushed simultaneously, each of them from its own side, towards the potato 9 until the extreme tips 3c of both cutter blades 3 run, while the blades revolve, along paths that are at least almost coinciding. The cutting edges 3a of the cutter blades hereby act upon the potato 9 and cut a potato ball 9a, whose dimensions are determined by the size of the cutting edges 3a. The potato ball 9a obtained is released and fed into a container, whereas the rests 9a of the potato 9 are passed into another container.

The feeder device 2 preferably consists of a conical funnel 6 placed above each grasping means 1 or at each feeding station, which funnel is, along a vertical plane running through the centre of the grasping means 1 placed underneath, divided into two identical halves 6a. The halves 6a are at their outer upper edges suspended on horizontal, parallel shafts 6b, whereby the funnel 6 is, e.g., by means of a cog system 6c, symmetrically openable in relation to the said vertical plane and to the grasping means 1 so that each new potato 9 that is fed through the funnel 6 into the grasping means 1 falls down in a substantially central position.

Centrally in each funnel 6, a vertical plug 8 is preferably provided, which is acted upon by a cylinder-piston device 7 and which presses one potato 9 at a time down between the grasping means 1 into the correct working position in relation to the cutter blades 3.

In an apparatus which comprises several pairs of cutter blades, all of the feeder devices 2 are appropriately placed side by side, whereby common longitudinal shafts 6b may be employed for suspending the funnel halves 6a and all of the feeding-in plugs 8 of the apparatus may be united by means of a yoke 10, which transmits the feeding movement from a cylinder-piston device 7 to all of the plugs 8. The movement of the yoke 10 is stabilized appropriately by means of two vertical guide pistons 12 provided at each end of the yoke 10.

The grasping means 1 consist, e.g., of thin, spring-loaded pinching elements arranged so as to clamp around their respective potatoes around the waist line of the potato. These grasping means 1 are appropriately placed along the periphey of one or several circular discs rotable around a horizontal shaft (not shown) parallel to the shafts 3b of the cutter blades 3, or possibly at the ends of arms radially projecting from this horizontal shaft, the said arms being arranged as stepwise, revolving around the said shaft. During the stepwise rotation, each grasping means 1 passes by a feeding-in station, a cutting station, as well as by a feeding-out station.

Another, highly favourable embodiment of the grasping means 1 comprises lamella packages 1a arranged in pairs and consisting of vertical substantially rectangular plates whose corners are preferably bevelled and which are placed at a distance from each other, the said lamella packages 1a being securably attached to a beam 13 placed centrally in the apparatus, preferably in the middle between the cutter blades 3 of the apparatus, facing each other, on each side of a hole 13a provided in the beam 13 for each pair of cutter blades 3. The plate edges at the ends of the lamelle packages 1a that are directed towards the space in front of each hole 13a in the transverse beam 13 are supposed to cut somewhat into and to hold a potato 9 pressed down into the space.

The lamella packages 1a are readily exchangeable. The length of the lamella packages 1a that are used must be adapted to the dimension of the cutter blades 3 so that an appropriate space is obtained for the cutter blades 3 between the lamella packages 1a. In apparatuses with several pairs of cutter blades 3, both ends of the centrally placed lamella packages appropriately constitute parts of the grasping means 1 of two adjoining pairs of cutter blades 3. The bevelled upper corners of the lamella packages 1a are helpful in centering a potato 9 that is fed in.

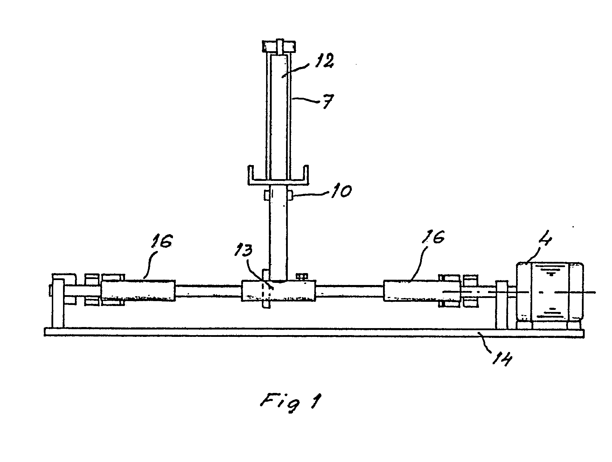

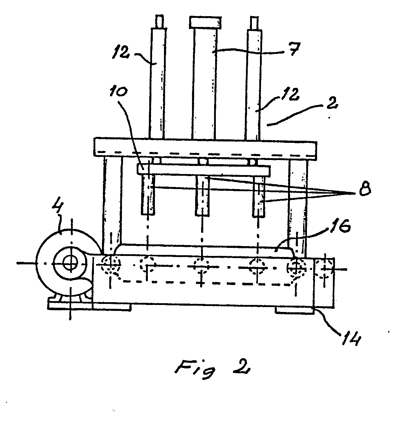

Figures 1 to 3 illustrate an apparatus which comprises two substantially horizontal, parallel guides 15 attached to a frame construction 14, the transverse beam 13 with the grasping means 1 and with the feeder device 2 with connected cylinder-piston device 7 being fixed to the middle portion of the said guides 15. On each side of this transverse beam 13, a sledge 16 is arranged that is displaceable by means of a cylinder-piston device 5 along both of the guides 15, the shafts 3b of the cutter blades 3 facing each other being journalled to the said sledges 16. In accordance with the figure, these shafts 3b are driven by means of an electric motor 4 coupled to a spline shaft 17, along which shaft 17 belt pulleys 17b of the two belts 18 which bring the cutter blades 3 into rotary movement via the pulleys 3d can be displaced.

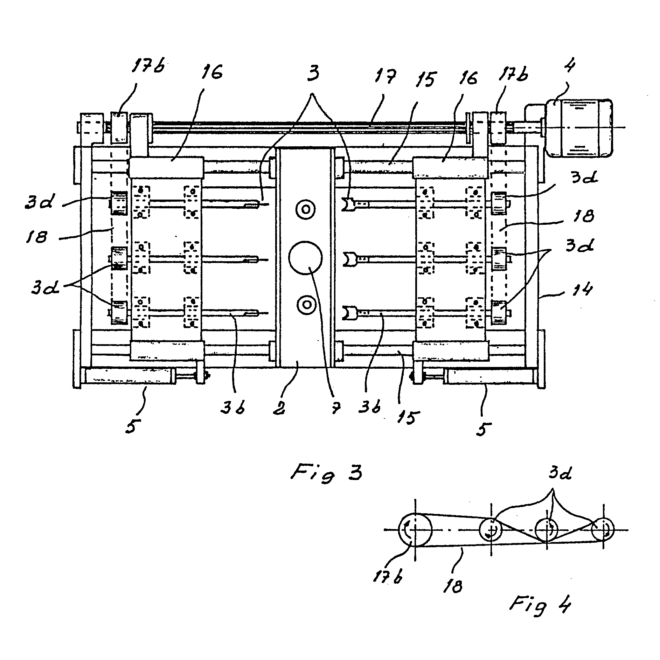

The apparatus shown in the drawing includes three pairs of cutter blades, but it is obvious that the number may vary as required. The cutter blades 3 are, preferably by means of cogbelts, made to revolve in pairs in the same direction and with the same speed of revolution, e.g., so that the two extreme pairs 3 revolve in one direction and the middle pair 3 in the opposite direction, whereby the angle between the cutting edges 3a of the opposite cutter blades 3 remains constant, e.g. 90°. In such a case, the opposite cutter blades 3 may, when cutting a potato ball 9a, be shifted to such an extend towards each other that the tips 3c of the cutter blades overlap each other to some extent, whereby the potato ball obtained is at the same time liberated from the annular rest 9b of the potato 9. The cogbelts 18 are hereat passed over the belt pulleys 17b and 3d, as is illustrated in Fig. 4, whereat necessary tension of the belts 18 is obtained at the same time.

In order to prevent the potato ball 9a from being caught on the revolving cutter blades 3 before it is totally cut loose, the pulleys 3d may be appropriately fixed somewhat eccentrically on the shafts 3b of the cutter blades 3. Thereby the speeds of revolution of the cutter blades 3 differ somewhat from each other during one revolution, so that the relative angle between the cutting edges 3a of the cutter blades 3 performs a pentulating movement between certain limit values during each revolution.

The opposite cutter blades 3 may also be made to rotate in opposite directions, whereat they are appropriately driven by means of round belts 18. Their shifting towards each other must, in this case, be stopped before the paths of rotation of the tips 3c of the opposite cutter blades coincide. In this case the cut potato ball 9a still adheres to the rest 9a of the potato 9 along a thin annular ring. The cut potato ball 9a is appropriately detached in connection with the feeding-out from the apparatus by means of a hollow pipe provided in the feeding-out station and of a plug jointly operative with same. The inner diameter of the hollow pipe must be substantially equal to the diameter of the cut potato ball 9a.

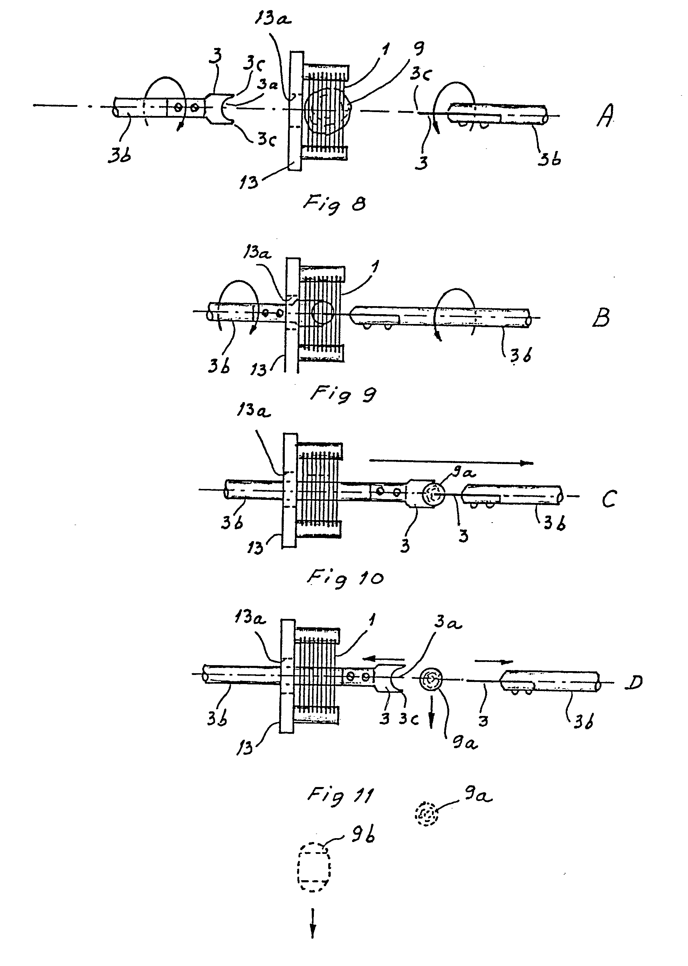

Figures 8 to 11 illustrate the various working phases of an apparatus in which the opposite cutter blades 3 revolve in the same direction. In Fig. 8, the rotary cutter blades 3 are in their starting positions and the potato 9 has been pushed down into the correct working position in between the grasping means 1. In Fig. 9, the revolving cutter blades 3 have been shifted to their inner extreme positions, whereat a potato ball 9a is obtained. Hereupon the rotary movement of the cutter blades 3 is stopped and, while maintaining their relative distance in accordance with Fig. 10, they are shifted a distance to either direction to the side, the potato ball 9a being maintained between the cutter blades 3 owing to their relative angular position. The cutter blades 3 are shifted preferably to a position above a container (not shown), into which the potato ball 9a falls down when the cutter blades are after this shifted in the direction away from each other, restored back to their starting positions and made to revolve again. Hereupon a new potato 9 is fed into the working position, the said new potato 9 is fed into the working position, the said new potato pushing off the annular rest 9a of the earlier cut potato 9, which rest 9a hereby appropriately falls down into a container placed underneath the grasping means 1.

The potato balls may also be cut out of strips or discs of larger potatoes, in which case the thickness of the strips or discs is substantially equal to the diameter of the potato balls to be cut off. Out of one disc, e.g., three of four, or possibly even more potato balls can be cut off at the same time, each ball being cut off by a pair of cutter blades of its own. For this purpose, the shafts 3b of each cutter blade 3 are appropriately provided with two universal joints, which permits simultaneous application of any desired number of pairs of cutter blades 3 to the potato disc.

When potato balls 9a are cut out of large potato discs, the shafts 3b of two opposite cutter blades 3 can be appropriately provided with heads of their own not revolving along with the shaft 3b, which head is provided with a number of parallel, adjoining outgoing shafts of cutter blades 3, whereat the movement of rotation of the incoming shaft 3b is transmitted to all of the outgoing shafts provided with cutter blades by means of cogwheels. By means of such heads, up to six or seven potato balls can be cut out of each disc.

In order to facilitate the exchange of lamella packages 1a when shifting from cutter blades 3 of one dimension to those of another dimension, it is appropriate to have ready sets of lamella packages 1a, intended for the dimensions concerned, as fixed to separate rails, which can be rapidly attached to or detached from the transverse beam 13 as required.

The cylinder-piston devices 5, 7 of the apparatus are appropriately connected to an integrated pneumatic system, which is, together with the electric motor 4, operated by means of a knob system. In order to stabilize the movements of the two cylinder-piston devices 5 that push the opposite cutter blades 3 away from or towards each other, these cylinder-piston devices are preferably mechanically interconnected, e.g., by means of racks. It is also possible that the movement of shifting of the cutter blades 3 takes place totally in the mechanical way.

The cutter blades 3, which can be readily exchanged, e.g., by detaching two screws on the shaft 3b, may also be shaped so that the cut potato balls 9a obtain a more or less elliptic form, which can also be achieved thereby that the cutter blades 3 are not shifted exactly so much towards each other as is required in order to obtain globe form of the potato balls 9a, or thereby that they are shifted towards each other further than what is required for globe form.

The fastening of the potatoes may, of course, also be arranged in a way different from what is described above. Likewise, the shafts 3b of the cutter blades 3 may also be driven by means of separate belts from the spline shaft 17.

## Claims

1. A method for mechanized production of potato balls, characterized in that preferably small potatoes (9) are fed one by one in between a grasping member (1), which fixes the potato (9) in the working position, whereupon two equally shaped thin cutter blades (3), which revolve as arranged as facing each other and which have substantially concavely semi-circular cutting edges (3a), are run against the potato simultaneously each from its side until the extreme tips (3c) of both cutter blades run, during rotation of the cutter blades, along paths that are at least almost coinciding, whereat the cutting edges (3a) of the cutter blades act upon the potato (9) and cut a potato ball (9a), whose dimension is determined by the size of the edges (3a) of the cutter blades, whereinafter the potato ball (9a) obtained is released and fed out into a container, whereas the rests (9b) of the potato are passed into another container.

2. A method as claimed in claim 1, characterized in that the potatoes (9) are fed in between the grasping means (1) by means of a piston (8), which presses the potato (9) down into the correct working position in relation to the cutter blades (3).

3. A method as claimed in claim 1 or 2, characterized in that the cutter blades (3) rotate in opposite directions, whereat their shifting towards each other is stopped before the paths of rotation of the tips (3a) of the two cutter blades coincide, so that the cut potato ball (9a) is still connected with the rest of the potato (9 along a thin annular ring.

4. A method as claimed in claim 3, characterized in that the potato ball (9a) is detached from the rest (9b) of the potato (9) in connection with the feeding-out, preferably by means of a plug and a hollow pipe, whose inner diameter is substantially equal to the diameter of the potato ball cut off.

5. A method as claimed in claim 1 or 2, characterized in that the cutter blades (3) rotate in the same direction and at the same speed of rotation, whereat the semi-circular cutting edges (3a) are all the time preferably at an angle of 90° in relation to each other so that the cutter blades (3) can be shifted towards each other to such an extent that the tips (3a) of the two cutter blades overlap each other to some extent and that the potato ball (9a) obtained becomes entirely cut-off.

6. A method as claimed in claim 5, characterized in that the potato ball (9a) is after the cutting retained between the cutter blades (3), whereupon the movement of rotation of the cutter blades is appropriately stopped and the cutter blades (3), with their relative distance retained, are shifted a distance to the side preferably to a position above a container, into which the potato ball (9a) falls down when the cutter blades (3) are hereupon shifted in the direction away from each other, restored back to their starting positions, and again made to rotate.

7. A method as claimed in claim 1, characterized in that the potato balls (9a) are cut out of discs of larger potatoes, whereat the thickness of the discs is substantially equal to the diameter of the potato ball (9a) that is to be cut, as well as that, out of one disc, at the same time, two or more potato balls (9a) are cut by means of a pair of cutter blades (3) of each potato ball's own.

8. A method as claimed in claim 1, characterized in that the potato balls (9a) are cut out of potato strips, whose both short sides are substantially equal to the diameter of the potato ball (9a) that is to be cut.

9. A method as claimed in claim 1, characterized in that the speeds of rotation of the cutter blades (3) differ from each other to some extent during a revolution so that the relative angle between the cutting edges (3a) of the cutter blades pendulates between certain limit values during a revolution when the cutter blades (3) revolve in the same direction.

10. A method as claimed in any of the preceding claims, characterized in that the potato ball (9a) is cut as completely round like a ball or as somewhat elliptic.

11. An apparatus for carrying out the method as claimed in claim 1, characterized in that the apparatus comprises a feeder device (2) connected to one or several grasping means (1), which grasping means (1) are arranged between or can be shifted into a position between their own respective pair of equally shaped, thin and readily exchangeable cutter blades (3) with concavely semicircular cutting edges (3a), placed as facing each other, which cutter blades (3) are, e.g. by means of an electric motor (4), arranged so as to revolve around their axes (3b), which are appropriately by means of cylinder-piston devices (5) displaceable in their longitudinal direction away from each other and towards each other until the paths of rotation of the tips (3c) of the cutter blades facing towards each other are at least almost coinciding.

12. An apparatus as claimed in claim 11, characterized in that the feeder device (2) of each grasping means (1) consists of a conical funnel (6) divided into two identical halves (6a) by a vertical plane passing through the centre of the grasping means (1), the said halves (6a) being at their outer upper edges suspended on horizontal, parallel shafts (6b), whereat the funnel (6) is, e.g., by means of a cog system (6c), symmetrically openable in relation to the said vertical plane and grasping means (1).

13. An apparatus as claimed in claim 12, characterized in that centrally in each funnel (6), a vertical plug (8) is provided which can be acted upon by a cylinder-piston device (7) and which is supposed to press a potato (9) down in between the grasping means (1) placed underneath.

14. An apparatus as claimed in claim 13, characterized in that all of the feeding plugs (8) of the apparatus are interconnected by means of a yoke (10), which transfers the feeding movement from a common cylinder-piston device (7) to all the plugs (8), whereat the movement of the yoke (10) is appropriately stabilized by means of two vertical guide pistons (12) arranged at each end of the yoke (10).

15. An apparatus as claimed in any of claims 11 to 14, characterized in that the grasping means (1) consist of thin, spring-loaded pinching elements arranged so as to clamp around their respective potatoes (9) around the waist line of the potato.

16. An apparatus as claimed in any of claims 11 to 14, characterized in that the grasping means (1) consist of lamella packages (1a) arranged in pairs, consisting of vertical, substantially rectangular plates whose corners are preferably bevelled and which are placed at a distance from each other, the said lamella packages (1a) being securably attached to a beam (13) placed centrally in the apparatus, preferably in the middle between the cutter blades (3) of the apparatus, facing each other, on each side of a hole (13a) provided in the beam (13) for each pair of cutter blades (3), whereat the plate edges at the ends of the lamella packages 1a that are directed towards the space in front of each hole (13a) in the transverse beam (13) are supposed to cut somewhat into and to hold a potato (9) pressed down into the space.

17. An apparatus as claimed in claim 16, characterized in that the said lamella packages (1a) are readily exchangeable and that the length of the lamella packages (1a) must be adapted to the dimension of cutter blades (3) used.

18. An apparatus as claimed in claim 15, characterized in that the grasping means (1) are arranged along the periphery of one or several circular discs rotable around a horizontal shaft that is parallel to the shafts (3b) of the cutter blades (3) or at the ends of arms projecting radially from this horizontal shaft, the said arms being arranged so as to revolve stepwise around the said shaft.

19. An apparatus as claimed in claim 18, characterized in that during the stepwise rotation, the grasping means (1) pass by stations for feeding-in, cutting, and feeding-out, whereat the apparatus is, at the feeding-out station, provided with a plug jointly operative with a hollow pipe.

20. An apparatus as claimed in claim 17, characterized in that the apparatus includes two substantially horizontal, parallel guides (15); attached to a frame construction (14), the transverse beam (13) with the grasping means (1) and with the feeder device (2) with connected cylinder-piston device (7) being fixed to the middle portion of the said guides (15), and on each side of this transverse beam (13), a sledge (16) is arranged that is displaceable by means of a cylinder-piston device (5) along both of the guides (15), the shafts (3b) of the cutter blades (3) facing each other being journalled to the said sledges (16) and the shafts (3b) being driven by means of an electric motor (4) coupled to a spline shaft (17), along which shaft (17) belt pulleys (17b) of the two belts (18) which bring the cutter blades (3) into rotary movement via the pulleys (3d) can be displaced.

21. An apparatus as claimed in claim 20, characterized in that the apparatus comprises three pairs of cutter blades (3), which are, by means of cogbelts (18), made to rotate in pairs in the same direction and at the same speed of rotation, e.g., so that the two extreme pairs revolve in one direction and the middle pair in the opposite direction, whereat the angle between the cutting edges (3a) of, opposite cutter blades (3) remains constant.

22. An apparatus as claimed in claim 21, characterized in that the cylinder-piston devices (5, 7) of the apparatus are coupled to an integrated pneumatic system, which, together with the electric motor (4), is operated by means of a knob system.

23. An apparatus as claimed in claim 22, characterized in that the two cylinder-piston devices (5) which shift the opposite cutter blades (3) away from and towards each other are mechanically interconnected, e.g., by means of racks.

24. An apparatus as claimed in claim 20, characterized in that the belt pulleys (3d) on the shafts (3b) of the cutter blades are somewhat eccentric, whereby the relative angle between the cutting edges (3a) of the two opposite cutter blades (3) pendulates between certain limit values during each revolution.

25. An apparatus as claimed in claim 19 or 20, characterized in that the opposite cutter blades (3) are made to rotate in opposite directions, whereat they are appropriately driven by means of round belts (18).

26. An apparatus as claimed in claim 11, characterized in that the shafts (3b) of each cutter blade (3) are provided with two universal joints each, which permits an adaptation of the cutter blades (3) in such a way in relation to each other that, e.g., three or more potato balls (9a) can be cut simultaneously out of a disc of a larger potato (9).

27. An apparatus as claimed in claim 20, characterized in that ready sets of lamella packages (1a) intended for cutter blades (3) of different dimensions have been in advance fastened to separate rails, which may be rapidly attached to or detached from the transverse beam (13) as required.

28. An apparatus as claimed in claim 11, characterized in that, on the shaft (3b) of each cutter blade, a head is provided which does not rotate along with the shaft (3b) and which is provided with a number of parallel, adjoining outgoing shafts for cutter blades (3), whereat the movement of rotation of the incoming shaft (3b) is transmitted to all of the outgoing shafts provided with cutter blades (3) by means of cogwheels.

**Patentansprüche**

1. Verfahren zur mechanisierten Herstellung von Kartoffelbällchen, dadurch gekennzeichnet, daß vorzugsweise kleine Kartoffeln nacheinander in eine Greifeinrichtung (1) eingebracht werden, welche die Kartoffel (9) in Bearbeitungslage fixiert, woraufhin zwei gleichgeformte dünne Schneidklingen (3) mit im wesentlichen halbkreisförmigen, konkaven Schneidkanten (3a) einander zugewandt in Drehung versetzt und von beiden Seiten gleichzeitig gegen die Kartoffel gedrückt werden, bis die äußersten Spitzen (3c) beider Schneidklingen während der Drehung der Schneidklingen längs Bahnen laufen, die zumindest fast zusammentreffen, worauf die Schneidkanten an der Kartoffel (9) angreifen und ein Kartoffelbällchen (9a) zuschneiden, dessen Abmessung durch den Umfang der Schneidkanten (3a) der Schneidklingen bestimmt wird, woraufhin das fertige Kartoffelbällchen (9a) freigegeben und in einen Behälter abgegeben wird, während die Kartoffelreste (9b) in einen anderen Behälter fallen.

2. Verfahren nach Anspruch 1, dadurch gekennzeichnet, daß die Kartoffeln (9) in die Greifeinrichtung (1) mittels eines Kolbens (8) eingebracht werden, welcher die Kartoffel (9) in die in Bezug auf die Schneidklingen (3) korrekte Bearbeitungslage nach unten preßt.

3. Verfahren nach Anspruch 1 oder 2, dadurch gekennzeichnet, daß die Schneidklingen (3) in entgegengesetzte Drehung versetzt werden und ihre aufeinander zulaufende Druckbewegung abgestoppt wird, bevor die Umlaufbahnen der Spitzen (3c) der beiden Schneidklingen zusammentreffen, sodaß das zugeschnittene Kartoffelbällchen (9a) mit dem Rest der Kartoffel noch über einen dünnen Kreisring verbunden ist.

4. Verfahren nach Anspruch 3, dadurch gekennzeichnet, daß das Kartoffelbällchen (9a) vom Rest (9b) der Kartoffel (9) während der Abgabe, vorzugsweise mittels eines Stopfens und eines Rohres, dessen Innendurchmesser im wesentlichen gleich dem Durchmesser des zugeschnittenen Kartoffelbällchens ist, getrennt wird.

5. Verfahren nach Anspruch 1 oder 2, dadurch gekennzeichnet, daß die Schneidklingen (3) im gleichen Drehsinn und mit gleicher Drehzahl in Drehung versetzt werden, wobei die halbkreisförmigen Schneidkanten (3a) ständig vorzugsweise in einem Winkel von 90° zueinander stehen, sodaß die Schneidklingen soweit zueinander geschoben werden können, daß die Spitzen (3c) der beiden Schneidklingen einander etwas überlappen und das fertige Kartoffelbällchen (9a) vollkommen abgeschnitten wird.

6. Verfahren nach Anspruch 5, dadurch gekennzeichnet, daß das Kartoffelbällchen (9a) nach dem Zuschneiden zwischen den Schneidklingen (3) festgehalten wird, deren Drehbewegung sodann zweckmäßigerweise gestoppt wird und welche dann unter Einhaltung ihres Abstandes voneinander seitlich vorzugsweise bis über einen Behälter verschoben werden und über diesem auseinandergezogen werden, sodaß das fertige Kartoffelbällchen in den Behälter herabfällt, und daß die Schneidklingen (3) anschließend in ihre Ausgangslage zurückgeführt und erneut in Drehung versetzt werden.

7. Verfahren nach Anspruch 1, dadurch gekennzeichnet, daß die Kartoffelbällchen (9a) aus Scheiben größerer Kartoffeln zugeschnitten werden, wobei die Stärke der Kartoffelscheiben im wesentlichen gleich dem Durchmesser des zuzuschneidenden Kartoffelbällchens ist, und daß aus einer Kartoffelscheibe gleichzeitig zwei oder mehr Kartoffelbällchen (9a) mittels jeweils eines Schneidklingenpaares (3, 3) für jedes einzelne Kartoffelbällchen geschnitten werden.

8. Verfahren nach Anspruch 1, dadurch gekennzeichnet, daß die Kartoffelbällchen (9a) aus Kartoffelstreifen ausgeschnitten werden, deren beide kurze Seiten im wesentlichen gleich dem Durchmesser des auszuschneidenden Kartoffelbällchens (9a) sind.

9. Verfahren nach Anspruch 1, dadurch gekennzeichnet, daß die Schneidklingen (3) mit etwas unterschiedlicher Drehzahl angetrieben werden, sodaß der Winkel zwischen ihren Schneidkanten (3a) bei gleichsinniger Drehung während einer Umdrehung zwischen gewissen Grenzwerten hin und her pendelt.

10. Verfahren nach irgendeinem der vorangehenden Ansprüche, dadurch gekennzeichnet, daß das Kartoffelbällchen (9a) vollständig rund wie eine Kugel oder etwas elliptisch geschnitten wird.

11. Vorrichtung zur Durchführung des Verfahrens nach Anspruch 1, dadurch gekennzeichnet, daß die Vorrichtung eine an eine oder mehrere Greifeinrichtungen (1) angeschlossene Zuführeinrichtung (2) aufweist, wobei jede Greifeinrichtung (1) zwischen ihrem eigenen Paar gleichgeformter, dünner und leicht austauschbarer Schneidklingen (3) mit konkaven, halbkreisförmigen, einander zugewandten Schneidkanten (3a) angeordnet ist bezw. in eine Position zwischen den Schneidklingen verschiebbar ist und wobei diese Schneidklingen (3) z.B. mittels eines Elektromotors (4) um ihre Achsen (3b) in Drehung versetzbar sind und zweckmäßigerweise mittels Kolben-Zylinder-Aggregaten (5) in Längsrichtung voneinander fort und zueinander hin verschiebbar sind, bis die Umlaufbahnen der Spitzen (3c) der einander zugewandten Schneidklingen zumindest fast zusammentreffen.

12. Vorrichtung nach Anspruch 11, dadurch gekennzeichnet, daß die Zuführeinrichtung (2) einer jeden Greifeinrichtung (1) aus einem konischen Trichter (6) besteht, der durch eine durch die Mitte der Greifeinrichtung (1) hindurchgehende senkrechte Ebene in zwei identische Hälften (6a) unterteilt ist, welche an ihren äußeren Oberkanten an wagerechten, parallelen Wellen (6b) aufgehängt sind, wobei der Trichter (6), z.B. mittels eines Zahntriebes (6c) in Bezug auf die Vertikalebene und die Greifeinrichtung (1) symmetrisch geöffnet werden kann.

13. Vorrichtung nach Anspruch 12, dadurch gekennzeichnet, daß in jedem Trichter (6) ein senkrechter Stopfen (8) mittig angeordnet ist, welcher durch ein Zylinder-Kolbenaggregat (7) derart betätigbar ist, daß eine Kartoffel (9) nach unten in die darunterliegende Greifeinrichtung (1) preßbar ist.

14. Vorrichtung nach Anspruch 13, dadurch gekennzeichnet, daß alle Druckstopfen (8) der Vorrichtung mittels eines Joches (10) miteinander verbunden sind, welches die Druckbewegung von einem gemeinsamen Zylinder-Kolbenaggregat (7) an alle Stopfen (8) überträgt, wobei die Bewegung des Joches (10) durch zwei vertikale Führungskolben (12) in geeigneter Weise stabilisiert wird, die an jedem Ende des Joches (10) angeordnet sind.

15. Vorrichtung nach irgendeinem der Ansprüche 11 bis 14, dadurch gekennzeichnet, daß die Greifeinrichtung (1) aus dünnen, federbelasteten Klemmelementen besteht, welche derart angeordnet sind, daß jeweils eine Kartoffel (9) längs ihrer Mittellinie rundherum festklemmbar ist.

16. Vorrichtung nach irgendeinem der Ansprüche 11 bis 14, dadurch gekennzeichnet, daß die Greifeinrichtung (1) aus paarweise angeordneten Lamellenpackungen (1a) besteht, die aus vertikalen, im wesentlichen rechteckigen Platten mit abgeschrägten Ecken zusammengesetzt sind, die im Abstand voneinander stehen, wobei diese Lamellenpackungen (1a) an einem in der Mitte der Vorrichtung, vorzugsweise in der Mitte zwischen den Schneidklingen (3), angeordneten Träger (13) derart befestigt sind, daß sie an jeder Seite eines im Träger (13) für jedes Schneidklingenpaar (3) vorgesehenen Loches (13a) einander gegenüberstehen, wobei die Plattenkanten an den Enden der Lamellenpackungen (1a), die zum Zwischenraum vor einem jeden Loch (13a) im Querträger (13) hinweisen, etwas in eine in diesen Zwischenraum heruntergedrückte Kartoffel (9) einschneiden und dadurch die Kartoffel festhalten.

17. Vorrichtung nach Anspruch 16, dadurch gekennzeichnet, daß die Lamellenpackungen (1a) leicht austauschbar sind und daß die Länge der Lamellenpackungen (1a) an die Abmessung der verwendeten Schneidklingen (3) angepaßt werden muß.

18. Vorrichtung nach Anspruch 15, dadurch gekennzeichnet, daß die Greifeinrichtungen (1) längs des Umfanges einer oder mehrerer kreisrunder Scheiben angeordnet sind, welche um eine parallel zu den Wellen (3b) der Schneidklingen (3) verlaufende wagerechte Welle verdrehbar sind oder an den Enden von radial von dieser Welle abstehenden Armen angeordnet sind, welche schrittweise um diese Welle in Drehung versetzbar sind.

19. Vorrichtung nach Anspruch 18, dadurch gekennzeichnet, daß die Greifeinrichtungen (1) während der schrittweisen Verdrehung Stationen für die Zufuhr, das Zuschneiden und die Abgabe durchlaufen, wobei die Vorrichtung an der Abgabestation einen mit Rohr zusammenwirkenden Druckstössel aufweist.

20. Vorrichtung nach Anspruch 17, dadurch gekennzeichnet, daß sie zwei im wesentlichen horizontale Parallelführungen (15) aufweist, welche an einer Rahmenkonstruktion (14) befestigt sind, daß der Querträger (13) mit den Greifeinrichtungen (1) und der Zuführeinrichtung (2) mit dem damit verbundenen Zylinder-Kolbenaggregat (7) am Mittelteil der Parallelführungen (15) befestigt ist und daß an jeder Seite des Querträgers (13) ein Schlitten (16) mittels eines Zylinder-Kolbenaggregates (5) längs der beiden Führungen (15) verschiebbar angeordnet ist, wobei die Wellen (3b) der beiden einander zugewandten Schneidklingen (3) in den Schlitten (16) gelagert sind und mittels eines Elektromotors (4) antreibbar sind, der mit einer Keilwelle (17) gekuppelt ist, längs welcher Riemenscheiben (17) für zwei die Schneidklingen (3) über Riemenscheiben (3d) in Drehung versetzende Treibriemen (18) verschiebbar sind.

21. Vorrichtung nach Anspruch 20, dadurch gekennzeichnet, daß sie drei Schneidklingenpaare (3) aufweist, welche mittels Zahnriemen (18) paarweise im gleichen Drehsinn und mit gleicher Drehzahl beispielsweise derart in Drehung versetzbar sind, daß die beiden Außenpaare sich in einer und das Mittelpaar sich in entgegengesetzter Richtung dreht, wobei der Winkel zwischen den Schneidkanten (3a) einander gegenüberliegender Schneidklingen (3) konstant bleibt.

22. Vorrichtung nach Anspruch 21, dadurch gekennzeichnet, daß die Zylinder-Kolbenaggregate (5, 7) der Vorrichtung mit einem integrierten Druckluftsystem verbunden sind, welches zusammen mit dem Elektromotor (4) über ein System von Bedienungsknöpfen bedienbar ist.

23. Vorrichtung nach Anspruch 22, dadurch gekennzeichnet, daß die beiden Zylinder-Kolbenaggregate (5), welche die einander gegenüberliegenden Schneidklingen (3) voneinander fort und zueinander hin schieben, mechanisch, z.B. durch Zahnstangen, miteinander verbunden sind.

24. Vorrichtung nach Anspruch 20, dadurch gekennzeichnet, daß die Riemenscheiben (3d) auf den Wellen (3b) der Schneidklingen (3) etwas exzentrisch sind, wodurch der entsprechende Winkel zwischen den Schneidkanten (3a) von zwei einander gegenüberliegenden Schneidklingen (3) zwischen gewissen Grenzwerten während jeder Umdrehung hin und her pendelt.

25. Vorrichtung nach Anspruch 19 oder 20, dadurch gekennzeichnet, daß die einander gegenüberliegenden Schneidklingen (3) in entgegengesetztem Drehsinn in Drehung versetzt werden, wobei sie zweckmäßigerweise durch Rundriemen (18) angetrieben werden.

26. Vorrichtung nach Anspruch 11, dadurch gekennzeichnet, daß die Welle (3b) einer jeden Schneidklinge (3) jeweils mit zwei Kreuzgelenken versehen ist, wodurch eine derartige Anpassung der Schneidklingen (3) in Bezug aufeinander erzielbar ist, daß aus einer Scheibe von einer größeren Kartoffel (9) gleichzeitig drei oder mehr Kartoffelbällchen herstellbar sind.

27. Vorrichtung nach Anspruch 20, dadurch gekennzeichnet, daß vorgefertigte, fertige Sätze von Lamellenpackungen (1a) für den Einsatz mit Schneidklingen (3) unterschiedlicher Abmessungen auf besonderen Schienen vorgesehen sind, welche je nach Bedarf schnell am Querträger (13) befestigbar oder von diesem abnehmbar sind.

28. Vorrichtung nach Anspruch 11, dadurch gekennzeichnet, daß auf der Welle (3b) einer jeden Schneidklinge (3) ein sich nicht mit der Welle (3b) drehender Kopf vorgesehen ist, welcher mit einer Anzahl von parallelen Ausgangswellen für Schneidklingen (3) versehen ist, wobei die Drehbewegung der Eingangswelle (3b) an alle, Schneidklingen (3) tragenden Ausgangswelle durch Zahnräder übertragen wird.

**Revendications**

1. Un procédé pour la production mécanisée de billes de pomme de terre, caractérisé en ce que des pommes de terre (9), de préférence petites, sont amenées une par une dans et entre des organes de serrage (1) qui fixent la pomme de terre (9) dans la position de travail, à la suite de quoi deux minces lames de couteaux (3) de même forme, qui tournent en étant agencées l'une en face de l'autre et qui présentent des arêtes coupantes semi-circulaires (3a) à peu près concaves sont déplacées simultanément contre la pomme de terre, chacune de son côté, jusqu'à ce que les extrémités (3c) des deux lames de couteaux se déplacent pendant la rotation des lames de couteaux, suivant des trajets qui sont au moins presque coïncidants, de sorte que les arêtes coupantes (3a) des lames de couteaux agissent sur la pomme de terre (9) et découpent une bille (9a) de pomme de terre dont la dimension est déterminée par la dimension des arêtes (3a) des lames de couteaux, la bille (9a) de pomme de terre obtenue étant ensuite libérée et délivrée dans un conteneur, tandis que les restes (9b) de la pomme de terre sont envoyés dans un autre conteneur.

2. Un procédé tel que revendiqué la revendication 1, caractérisé en ce que les pommes de terre (9) sont amenées dans et entre les moyens de serrage (1) au moyen d'un piston (8) qui abaisse la pomme de terre (9) dans la position de travail correcte par rapport aux lames de couteaux (3).

3. Un procédé tel que revendiqué dans la revendication 1 ou 2, caractérisé en ce que les lames de couteaux (3) tournent en sens opposé, tandis que leur déplacement en direction l'une de l'autre est arrêté avant que coïncident les trajets de rotation des pointes (3a) des deux lames de couteaux, de sorte que la bille de pomme de terre (9a) découpée est toujours reliée au reste de la pomme de terre (9) suivant une mince couronne annulaire.

4. Un procédé tel que revendiqué dans la revendication 3, caractérisé en ce que la bille de pomme de terre (9a) est détachée du reste (9b) de la pomme de terre (9) pour l'éjection, de préférence au moyen d'un tampon et d'un tube creux dont le diamètre interne est à peu près égal au diamètre de la bille de pomme de terre découpée.

5. Un procédé tel que revendiqué dans la revendication 1 ou 2, caractérisé en ce que les lames de couteaux (3) tournent dans le même sens et à la même vitesse de rotation, tandis que les arêtes coupantes semi-circulaires (3a) se trouvant tout le temps de préférence à un angle de 90° l'une par rapport à l'autre de sorte que les lames de couteaux (3) peuvent être déplacées l'une vers l'autre dans une mesure telle que les pointes (3a) des deux lames de couteaux se recouvrent l'une l'autre dans une certaine mesure et que la bille de pomme de terre (9a) obtenue se trouve entièrement découpée.

6. Un procédé tel que revendiqué dans la revendication 5, caractérisé en ce qu'après la coupe la bille (9a) de pomme de terre est retenue entre les lames de couteaux (3) à la suite de quoi le déplacement en rotation des lames de couteaux est arrêté de façon appropriée et les lames de couteaux (3), en conservant leurs distances relatives, sont déplacées à une certaine distance sur le côté de préférence dans une position au-dessus d'un conteneur dans lequel tombe la bille (9a) de pomme de terre lorsque les lames de couteaux (3) sont ensuite déplacées en s'écartant l'une de l'autre, ramenées dans leurs positions de départ et entrainées de nouveau en rotation.

7. Un procédé tel que revendiqué dans la revendication 1, caractérisé en ce que les billes de pomme de terre (9a) sont découpées dans des disques de pommes de terre plus grandes, tandis que l'épaisseur des disques est à peu près égale au diamètre de la bille de pomme de terre (9a) qui doit être découpée, et en ce que deux ou plus de deux billes de pomme de terre (9a) sont découpées en même temps dans un disque au moyen d'une paire de lames de couteaux (3) propre à chaque bille de pomme de terre.

8. Un procédé tel que revendiqué dans la revendication 1, caractérisé en ce que les billes de pomme de terre (9a) sont découpées dans des bandes de pomme de terre dont les deux côtés courts sont à peu près égaux au diamètre de la bille de pomme de terre (9a) qui doit être découpée.

9. Un procédé tel que revendiqué dans la revendication 1, caractérisé en ce que les vitesses de rotation des lames de couteaux (3) diffèrent l'une de l'autre dans une certaine mesure pendant une révolution de sorte que l'angle relatif entre les arêtes coupantes (3a) des lames de couteaux oscille entre certaines limites de valeurs pendant une révolution lorsque les lames de couteaux (3) tournent dans la même sens.

10. Un procédé tel que revendiqué dans l'une quelconque des revendications précédentes, caractérisé en ce que la bille de pomme de terre (9a) est découpée complètement ronde comme une bille ou un peu elliptique.

11. Un appareil pour la mise en oeuvre du procédé tel que revendiqué dans la revendication 1, caractérisé en ce que l'appareil comprend un dispositif d'alimentation (2) relié à un ou plusieurs dispositifs de serrage (1), ces dispositifs de serrage (1) étant agencés entre, ou pouvant être déplacés dans une position entre leur propre paire respective de lames de couteaux minces (3) de même forme et facilement interchangeables ayant des arêtes coupantes semi-circulaires concaves (3a) disposées l'une en face de l'autre, ces lames de couteaux (3) étant adaptées, par exemple au moyen d'un moteur électrique (4), pour tourner autour de leurs axes (3b) et pouvant être déplacées de façon appropriée dans leur sens longitudinal au moyen de dispositifs (5) à cylindre et piston en s'écartant l'une de l'autre et l'une vers l'autre jusqu'à ce que les trajets de rotation des pointes (3c) des lames de couteaux dirigées l'une vers l'autre soient au moins presque en coïncidence.

12. Un appareil tel que revendiqué dans la revendication 11, caractérisé en ce que le dispositif d'alimentation (2) de chaque dispositif de serrage (1) consiste en un entonnoir conique (6) divisé en deux moitiés identiques (6a) par un plan vertical passant par le centre du dispositif de serrage (1), lesdites moitiés (6a) étant suspendues par leurs bords externes supérieurs sur des arbres horizontaux parallèles (6b), tandis que l'entonnoir (6) peut être ouvert de façon symétrique, par exemple au moyen d'un système (6c) à dents, par rapport audit plan vertical et au dispositif de serrage (1).

13. Un appareil tel que revendiqué dans la revendication 12, caractérisé en ce qu'il est prévu en position centrale dans chaque entonnoir (6) un tampon vertical (8) qui peut être actionné par un dispositif (7) à cylindre et piston et qui est destiné à abaisser une pomme de terre (9) dans et entre les moyens de serrage (1) disposés au-dessous.

14. Un appareil tel que revendiqué dans la revendication 13, caractérisé en ce que tous les tampons d'alimentation (8) de l'appareil sont reliés entre eux au moyen d'une chape (10) qui transfère le mouvement d'alimentation provenant d'un dispositif commun (7) à cylindre et piston à tous les tampons (8), tandis que le déplacement

de la chape (10) est stabilisé de façon appropriée au moyen de deux pistons verticaux (12) de guidage disposés à chaque extrémité de la chape (10).

15. Un appareil tel que revendiqué dans l'une quelconque des revendications 11 à 14, caractérisé en ce que les moyens de serrage (1) consistent en de minces éléments de pincement sollicités élastiquement agencés de façon à se serrer autour de leurs pommes de terre respectives (9) autour de la périphérie de la pomme de terre.

16. Un appareil tel que revendiqué dans l'une quelconque des revendications 11 à 14, caractérisé en ce que les moyens de serrage (1) consistent en des paquets (1a) de lamelles, disposés par paires, consistant en des plaques verticales à peu près rectangulaires dont les angles sont de préférence chanfreinés et qui sont disposés à une certaine distance l'un de l'autre, lesdits paquets (1a) de lamelles étant fixés de façon sûre sur une poutre (13) disposée au milieu de l'appareil, de préférence au milieu entre les lames de couteaux (3) de l'appareil, l'un en face de l'autre, de chaque côté d'un trou (13a) prévu dans la poutre (13) pour chaque paire de lames de couteaux (3), tandis que les arêtes des plaques aux extrémités des paquets (1a) de lamelles qui sont dirigées vers l'espace devant chaque trou (13a) dans la poutre transversale (13) sont destinées à couper un peu dans une pomme de terre (9) et à maintenir celle-ci abaissée dans ledit espace.

17. Un appareil tel que revendiqué dans la revendication 16, caractérisé en ce que lesdits paquets (1a) de lamelles sont facilement interchangeables et en ce que la longueur des paquets (1a) de lamelles doit être adaptée à la dimension des lames de couteaux (3) utilisées.

18. Un appareil tel que revendiqué dans la revendication 15, caractérisé en ce que les moyens de serrage (1) sont disposés le long de la périphérie d'un ou de plusieurs disques circulaires rotatifs autour d'un arbre horizontal qui est parallèle aux arbres (3b) des lames de couteaux (3) ou aux extrémités de bras faisant saillie radialement sur cet arbre horizontal, lesdits bras étant agencés de façon à tourner pas à pas autour dudit arbre.

19. Un appareil tel que revendiqué dans la revendication 18, caractérisé en ce que pendant la rotation pas à pas, les moyens de serrage (1) passent par des postes pour l'alimentation, la découpe et l'éjection, tandis que l'appareil comporte, au poste d'éjection, un tampon agissant conjointement avec un tube creux.

20. Un appareil tel que revendiqué dans la revendication 17, caractérisé en ce que l'appareil comprend deux guides parallèles (15) à peu près horizontaux fixés sur un bâti (14), la poutre transversale (13) avec les moyens de serrage (1) et avec le dispositif d'alimentation (2) avec le dispositif relié (7) à cylindre et piston étant fixée sur la partie médiane desdits guides (15) et sur chaque côté de cette poutre transversale (13), est

agencée une glissière (16) qui est déplaçable au moyen d'un dispositif (5) à cylindre et piston le long des deux guides (15), les arbres (3b) des lames de couteaux (3) disposés face à face tourillonnant sur ladite glissière (16) et les arbres (3b) étant entraînés au moyen d'un moteur électrique (4) couplé à un arbre cannelé (17), des poulies à courroie (17b) des deux courroies (18) qui amènent les lames de couteaux (3) en rotation par l'intermédiaire des poulies (3d) pouvant être déplacées.

21. Un appareil tel que revendiqué dans la revendication 20, caractérisé en ce que l'appareil comprend trois paires de lames de couteaux (3) qui sont entraînées par paires en rotation au moyen de courroies dentées (18) dans le même sens et avec la même vitesse de rotation, par exemple de façon que les deux paires extrêmes tournent dans un sens et la paire médiane dans le sens opposé, tandis que l'angle entre les arêtes coupantes (3a) des lames de couteaux opposées (3) reste constant.

22. Un appareil tel que revendiqué dans la revendication 21, caractérisé en ce que les dispositifs (5, 7) à cylindre et piston de l'appareil sont couplés à un système pneumatique intégré qui, avec le moteur électrique (4), est actionné au moyen d'un système à bouton.

23. Un appareil tel que revendiqué dans la revendication 22, caractérisé en ce que les deux dispositifs (5) à cylindre et piston qui déplacent les lames de couteaux opposées (3) en s'écartant et en se rapprochant l'une de l'autre sont reliés mécaniquement, par exemple au moyen de crémaillères.

24. Un appareil tel que revendiqué dans la revendication 20, caractérisé en ce que les poulies (3d) à courroie sur les arbres (3b) des lames de couteaux sont un peu excentriques, grâce à quoi l'angle relatif entre les arêtes coupantes (3a) de deux lames de couteaux opposées (3) oscille entre certaines valeurs limites durant chaque révolution.

25. Un appareil tel que revendiqué dans la revendication 19 ou 20, caractérisé en ce que les lames de couteaux opposées (3) cont entrainées en rotation en sens opposé, tandis qu'elles sont entrainées de façon appropriée au moyen de courroies circulaires (18).

26. Un appareil tel que revendiqué dans la revendication 11, caractérisé en ce que les arbres (3b) de chaque lame de couteau (3) sont pourvus chacun de deux joints universels, qui permettent une adaptation des lames de couteaux (3) l'une par rapport à l'autre de telle sorte que par exemple trois ou plus de trois billes de pomme de terre (9a) peuvent être découpées simultanément dans un disque d'une pomme de terre (9) plus grande.

27. Un appareil tel que revendiqué dans la revendication 20, caractérisé en ce que des jeux préparés de paquets (1a) de lamelles destinés à des lames de couteaux (3) de différentes dimensions sont fixés à l'avance sur des rails séparés

qui peuvent être fixés rapidement ou démontés de la poutre transversale (13) suivant les besoins.

28. Un appareil tel que revendiqué à la revendication 11, caractérisé en ce que sur l'arbre (3b) de chaque lame de couteau est prévue une tête qui ne tourne pas en même temps que l'arbre (3b) et qui est pourvue d'un certain nombre d'arbes sortants parallèles pour des lames de couteaux (3), de sorte que le mouvement de rotation de l'arbre entrant (3b) est transmis à tous les arbres sortants pourvus de lames de couteaux (3), au moyen de roues dentées.

Fig 1

1

Fig 2

0 077 512

Fig 3

Fig 4

Fig 5

Fig 6

Fig 7

4

Fig 8

Fig 9

Fig 10

Fig 11